# EUROPEAN PATENT APPLICATION

(11) **EP 1 873 797 A1**
(43) Date of publication of application: **02.01.2008**
(21) Application number: 07252660.1
(22) Date of filing: 02.07.2007
(51) Int. Cl.: H01G 4/38, H01G 4/30, H01G 4/10, H01G 4/12

(54) **Electronic component and capacitor**

(30) Priority: 13.12.2006 US 638213; 30.06.2006 JP 2006182583
(71) Applicant: E.I. du Pont de Nemours and Company, Wilmington, DE 19898 (US)
(72) Inventor: Ogiwara, Toshiaki, Tochigi-ken 320-0003 (JP)
(74) Representative: Matthews, Derek Peter

(57) **Abstract**

An electronic component (301) includes a substrate (10) and an electrically conductive sheet (20) having an adhesive property and attached to the substrate (10). A plurality of the electronic component can be laminated. The electronic component can be used for capacitor.

## Description

### Field of the Invention

The present invention relates to an electronic component in which a substrate and an electrically conductive sheet are laminated. Furthermore, the present invention relates to a capacitor having the electronic component. The present invention is suitable for use in a variety of electronic devices such as electric circuit boards.

### TECHNICAL BACKGROUND

Components in which a conductive layer is formed on a substrate, that is, electronic components are often used for forming electronic devices. The electronic components are used, for example, in capacitors.

Screen printing or transferring have been used as methods for forming an electrically conductive layer on a substrate. A method for manufacturing a printed circuit board by using screen printing, which is disclosed in Japanese Patent Application Laid-open No. 2004-063538, is an example of the methods using screen printing. A method for forming an electrically conductive layer by a transfer process is disclosed, for example, in WO 02/03766.

However, when the substrate itself is very fragile, problems are associated with the substrate in the screen printing or transfer process. For example, in the screen printing process, a paste is coated on a substrate by using a squeezee, but there is a risk of the substrate being deformed by the pressure applied by the squeezee. A pressure has to be also applied in the transfer process, thereby similarly creating a risk of the substrate being deformed. In recent years a demand was created for using thin substrates to miniaturize the electronic devices, and the possibility of damaging the substrate by the pressure applied to the substrate raised concerns.

On the other hand, in the case of laminated components, the layers are often bonded together with an electrically conductive adhesive (for example, see U.S. Patent No. 6,985,353), and when an electrically conductive adhesive is used, a uniform thickness of the adhesive layer is difficult to obtain. Bonding defects caused by nonuniformity or voids on the coating surface also raise concerns. Furthermore, because the adhesive layer is present, the thickness and electric resistance of the product tend to increase. In addition, because the layers are bonded with an electrically conductive adhesive after each layer has been formed by heat treatment, a thermal load applied to the substrate is increased.

### SUMMARY OF THE INVENTION

It is an object of the present invention to provide means for forming an electrically conductive layer with small damage to substrate, thereby enabling the realization of an electronic component having excellent electric properties.

The present invention relates to an electronic component comprising a substrate and an electrically conductive sheet having an adhesive property and attached to the substrate. Furthermore, the present invention relates to a capacitor having the electronic component.

More specifically, the electronic component in accordance with the present invention is characterized in comprising a substrate and an electrically conductive sheet having an adhesive property and attached to the substrate.

The electronic component in accordance with the present invention is preferably disposed so as to cover an upper surface, a lower surface, and at least one side surface of the substrate.

Furthermore, the electronic component in accordance with the present invention also includes a configuration (laminated electronic component) in which two or more substrates having attached thereto an electrically conductive sheet having an adhesive property, that is, two or more electronic components in accordance with the present invention are laminated. In the laminated electronic component, the layers are preferably bonded to each other by using an adhesive force of the electrically conductive sheet having the adhesive property. As another method, the layers in the laminated electronic component may be bonded together by using an electrically conductive adhesive.

The capacitor in accordance with the present invention has any of the above-described electronic components or laminated electronic components.

The substrate constituting the electronic component, laminated electronic component, or capacitor in accordance with the present invention is preferably formed from a dielectric or from a conductor and a dielectric.

More specifically the substrate constituting the electronic component, laminated electronic component, or capacitor in accordance with the present invention can be selected from the group including a ceramic, and aluminum, tantalum, niobium, and oxides or nitrides thereof. The substrate constituting the capacitor in accordance with the present invention can be selected from the group including a ceramic; aluminum and an oxide or a nitride thereof; tantalum and an oxide or a nitride thereof; niobium and an oxide or a nitride thereof; and an oxide or nitride of aluminum, tantalum, or niobium. In particular, the substrate constituting the capacitor in accordance with the present invention is preferably a metal sheet comprising metallic aluminum having an oxide coating film formed on the surface thereof by a conversion treatment.

In the electronic component in accordance with the present invention, an electrically conductive layer is formed by disposing an electrically conductive sheet having the adhesive property on a substrate. For this reason, a pressure applied to the substrate in the process of forming the electrically conductive layer is small. As a result, damage to the substrate in the process of forming the electrically conductive layer is inhibited and a contribution is made to the reliability improvement of an electronic device.

Furthermore, when an electrically conductive layer is formed by coating an electrically conductive paste on a substrate, the film thickness easily varies depending on the coating site. In accordance with the present invention, a sheet-like electrically conductive layer is produced in advance and thickness control of the sheet-like electrically conductive layer is comparatively easy to conduct. For this reason, an electrically conductive layer of a constant thickness can be formed, a spread in performance of the electronic component formed and a capacitor using same can be inhibited and a contribution can be made to thickness reduction and miniaturization of the capacitor.

### BRIEF DESCRIPTION OF THE DRAWINGS

FIG. 1 is a perspective view illustrating an electronic component of the first embodiment of the present invention;
Figs. 2A to 2C are perspective views illustrating the process of manufacturing the electronic component shown in FIG. 1;
FIG. 3 is a perspective view illustrating the electronic component of the second embodiment of the present invention;
FIG. 4A is a perspective view illustrating the laminated electronic component of the third embodiment of the present invention having a structure in which the electronic components shown in FIG. 1 are laminated;
FIG. 4B is a side view thereof;
Figs.4C and D are side views illustrating laminated electronic components of other examples of the third embodiment of the present invention;
FIG. 5A is a perspective view illustrating an example of the laminated electronic component of the fourth embodiment of the present invention;
FIG. 5B is a side view thereof;
Figs. 5C and 5D are side views illustrating laminated electronic components of other examples of the fourth embodiment of the present invention;
Figs. 6A to 6E are side views illustrating the process for manufacturing the laminated electronic component shown in Figs. 5A and B;
FIG. 7A is a perspective view illustrating an example of the laminated electronic component of the fifth embodiment of the present invention;
FIG. 7B is a side view illustrating the laminated electronic component of another example of the fifth embodiment of the present invention;
FIG. 8 is a schematic cross-sectional view illustrating the capacitor of one embodiment of the present invention; and
Figs. 9A to 9F illustrate a process for manufacturing the capacitor of one embodiment of the present invention shown in FIG. 8.

### DESCRIPTION OF THE PREFERRED EMBODIMENTS

The present invention relates to an electronic component. The electronic component comprises a substrate and an electrically conductive sheet having the adhesive property and attached to the substrate. The present invention also relates to a capacitor. The capacitor has the electronic component. The aforementioned inventions will be successively described hereinbelow.

### (I) Electronic component

The electronic component in accordance with the present invention will be explained hereinbelow with reference to the appended drawings.

### [First Embodiment]

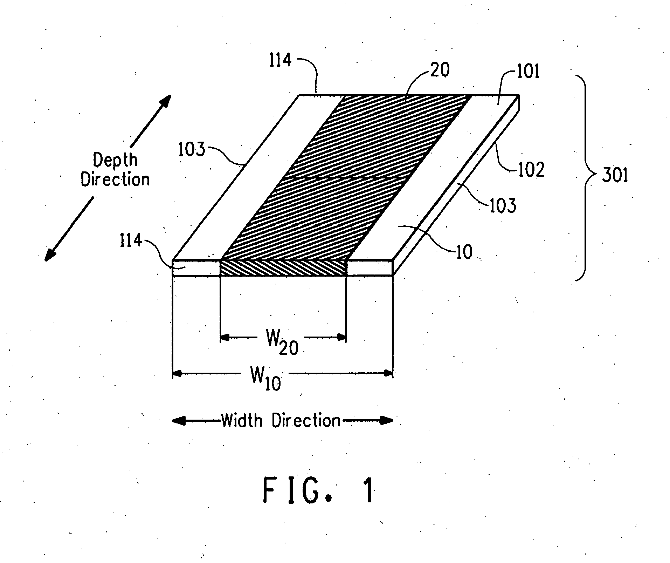

FIG. 1 is a perspective view illustrating an electronic component 301 of the first embodiment of the present invention. The electronic component 301 has a substrate 10 and an electrically conductive sheet 20 having the adhesive property. The substrate 10 has an upper surface 101, a lower surface 102, and a two pairs of opposing side surfaces 103, 114. The electrically conductive sheet 20 having the adhesive property is disposed so as to cover the upper surface 101, lower surface 102, and one pair of opposing side surfaces 114 of the substrate.

The electrically conductive sheet 20 having the adhesive property may be disposed in any position in the widthwise direction of the side surfaces 114 of the substrate according to the object of the electronic component. For example, the electrically conductive sheet 20 having the adhesive property may be disposed in the central section as shown in FIG. 1, or it may be disposed closer to one side (such configuration is not shown in the figure).

When the width of the side surface 114 of the substrate 10 where the electrically conductive sheet 20 having the adhesive property is provided is denoted by W₁₀ and the width of the electrically conductive sheet 20 having the adhesive property is denoted by W₂₀, then the W₁₀ : W₂₀ ratio is preferably 100 : 98 to 10 : 50. The size of the substrate 10 represented by width × length in the depth direction × thickness is preferably within, for example, a range of about 0.4 cm × 0.4 cm × 0.5 mm to 3 cm × 3 cm × 3 mm.

### (Method for manufacturing the electronic component of the first embodiment)

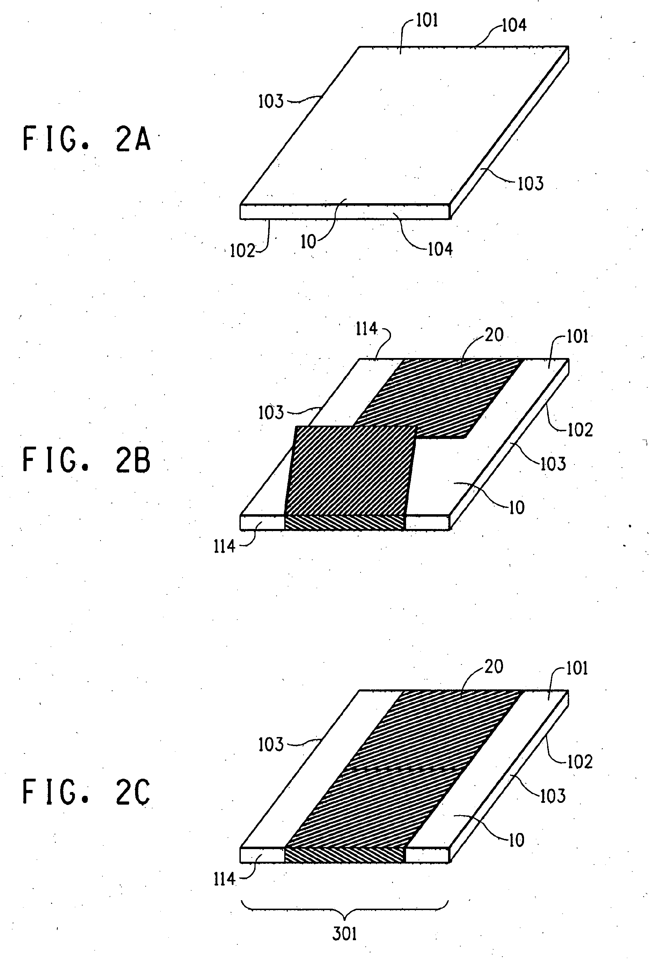

The electronic component of the first embodiment in accordance with the present invention is manufactured, for example, as shown in Figs. 2A to 2C. More specifically, the electrically conductive sheet 20 having the adhesive property is wound so as to cover the upper surface 101, lower surface 102 and one pair of side surfaces 104 of the two pairs of opposing side surfaces 103, 104 of the substrate 10. The side surface 104 onto which the electrically conductive sheet 20 having the adhesive property is wound will be referred to as a side surface 114.

The winding start position of the electrically conductive sheet 20 having the adhesive property is, for example, close to the center of the upper surface 101 of the substrate 10, as shown in FIG. 2, but the present invention is not limited to such configuration. For example, one zone where the upper surface 101 and side surface 114 cross each other may be the winding start position.

The winding may be conducted manually or, if possible, by using an automation means.

Heat treatment of the electronic component 301 is preferably conducted to provide for tight intimate contact of the wound electrically conductive sheet 20 having the adhesive property with the substrate 10. The heating is preferably conducted under the following conditions: 80°C to 200°C, 10 min to 60 min.

### [Second Embodiment]

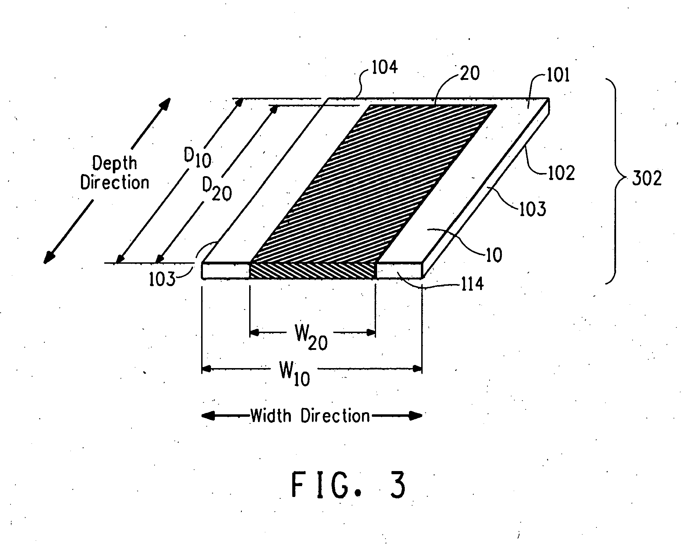

FIG. 3 is a perspective view illustrating the electronic component 302 of the second embodiment of the present invention. This electronic component 302 comprises a substrate 10 and an electrically conductive sheet 20 having the adhesive property. In the present embodiment, the substrate 10 is identical to that explained in the first embodiment, but the coating mode of the electrically conductive sheet 20 having the adhesive property is different from that of the first embodiment.

The electrically conductive sheet 20 having the adhesive property is provided on the upper surface 101, lower surface 102, and only one side surface 114 of a pair of opposing side surfaces.

The electrically conductive sheet 20 having the adhesive property can be placed on the upper surface 101 and lower surface 102 of the substrate 10 from one side surface 114 to the other side surface 104 of a pair of opposing side surfaces. Alternatively, the electrically conductive sheet 20 having the adhesive property may be placed from one side surface 114 to the intermediate section of the other side surface 104, that is, to the intermediate section at a length of D₁₀ of the side surface 103 of the substrate 10. When the electrically conductive sheet is placed as far as the intermediate section, the length (length in the depth direction) of placement D₂₀ is preferably within a range of 100 : 100 to 100 : 90, as represented by the D₁₀ : D₂₀ ratio.

The ratio W₁₀ : W₂₀ of the width (W₁₀) of the side surface 114 of the substrate 10 to the width (W₂₀) of the electrically conductive sheet 20 having the adhesive property is preferably 100 : 98 to 100 : 50.

### (Method for manufacturing the electronic component of the second embodiment)

The electronic component 302 of the second embodiment of the present invention is manufactured similarly to the electronic component 301 shown in FIG. 1 by winding the electrically conductive sheet 20 having the adhesive property on the substrate 10 manually or, when possible, with an automated means. However, by contracts with the case of the electronic component 301 shown in FIG. 1, the electrically conductive sheet 20 having the adhesive property is wound so as to cover the upper surface 101, lower surface 102, and only one side surface 114 of a pair of opposing side surfaces of the substrate 10.

### [Third Embodiment]

### (i) First example

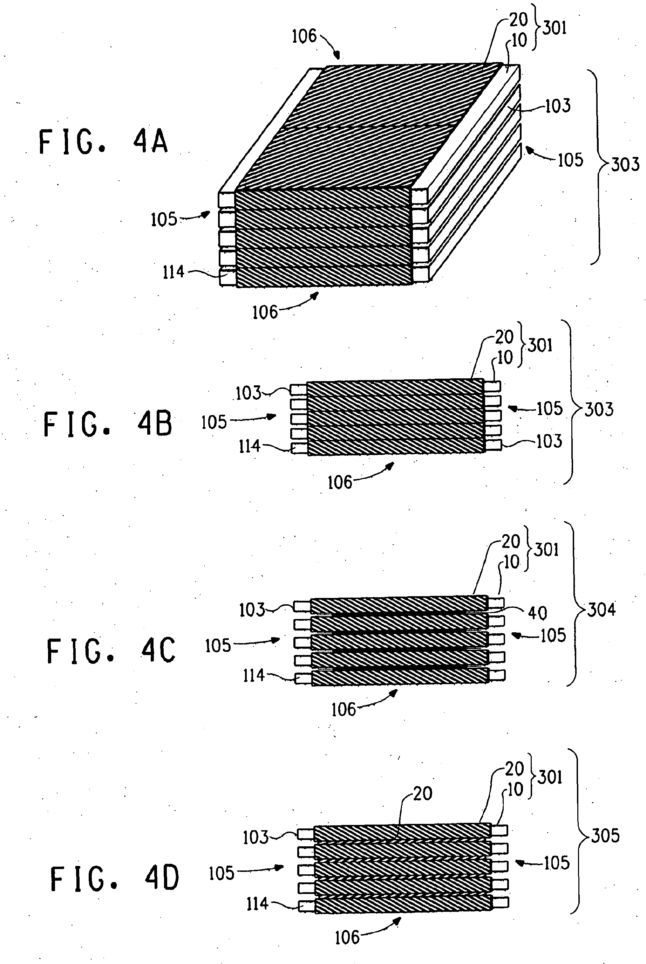

FIG. 4A (perspective view) and FIG. 4B (side view showing a side surface 106) illustrate a laminated electronic component 303 of the first example of the third embodiment of the present invention. The laminated electronic component 303 is a laminate having a structure in which two or more electronic components 301 shown in FIG. 1 are laminated.

As shown in the figure, the electronic components 301 have the same orientation in the electronic component 303. Thus, a pair of opposing side surfaces 114 covered by the electrically conductive sheet 20 having the adhesive property of the electronic component 301 and a pair of opposing side surface 103 that are not covered are disposed to have respective identical orientations. As a result, the laminated electronic component 303 has side surfaces 106 obtained by lamination of a pair of opposing side surfaces 114 that are covered with the electrically conductive sheet 20 having the adhesive property and side surfaces 105 obtained by laminating a pair of opposing side surfaces 103 that are not covered with the electrically conductive sheet 20 having the adhesive property.

The figure shows an example in which five electronic components 301 were laminated, but no specific limitation is placed on the number of laminated electronic components and it can be set according to the application.

Because the laminated electronic component 303 in accordance with the present invention is a laminate of electronic components 301 having the electrically conductive sheets 20 having the adhesive property, the laminate can be obtained by bonding only with the electrically conductive sheets 20 having the adhesive property. The adhesive force of the electrically conductive sheets 20 having the adhesive property that are contained in the electronic components 301 is used for bonding the laminated electronic component 303.

Furthermore, in accordance with the present invention, if necessary, the bonding of the laminate may be realized by using a separate electrically conductive adhesive or by inserting the electrically conductive sheets used in accordance with the present invention between the electronic components. These examples will be explained below.

### (ii) Second example

The second example relates to a laminated electronic component in which a plurality of electronic components 301 are laminated by introducing an electrically conductive adhesive therebetween. FIG. 4C is a side view of such laminated electronic component 304. FIG. 4C is a view of the laminate from the side surface 106.

The laminated electronic component 304 is obtained by laminating the electronic components 301 by using an electrically conductive adhesive 40 as bonding means, as shown in the figure.

### (iii) Third example

The third example relates to a laminated electronic component in which a plurality of electronic components 301 are laminated by inserting electrically conductive sheets having the adhesive property therebetween. FIG. 4D is a side view of such laminated electronic component 305. FIG. 4D is a view of the laminate from the side surface 106.

In the laminated electronic component 305, the electrically conductive sheets 20 having the adhesive property are inserted between the electronic components 301 as means for bonding the electronic components 301. The adhesive force of the electrically conductive sheets having the adhesive property is used to bond the electronic components together.

### (Method for manufacturing the electronic component of the third embodiment)

The laminated electronic component of the third embodiment of the present invention is manufactured by laminating two or more electronic components 301 with the same orientation thereof. Thus, in the electronic component 303, the electronic components 301 are laminated so that the side surfaces 114 coated with the electrically conductive sheets 20 having the adhesive property and the uncoated side surfaces 103 are oriented to avoid mixing thereof in the side surfaces of the electronic component 303. The lamination can be conducted manually or automatically.

In the laminated electronic component 303 of the first example, the adhesive force of the electrically conductive sheets 20 having the adhesive property contained in the electronic components 301 is used for bonding the electronic components 301 together.

When a sufficient bonding strength is ensured, the electronic components are preferably bonded without using an electrically conductive adhesive, as in the laminated electronic component of the first example. In this example, the thickness of the laminate obtained is reduced and the products can be miniaturized as compared to the case where the electrically conductive adhesive is used to the degree corresponding to the absence of the electrically conductive adhesive. Furthermore, because the electrically conductive adhesive has a certain electric resistance, the electric resistance of the product tends to increase when a electrically conductive adhesive is used. When no electrically conductive adhesive is used, the electric resistance can be suppressed. Other merits of the process using no adhesive include a shortened production process and a reduction in thermal history provided to the component.

For example, a laminate can be formed by inserting, if necessary, an electrically conductive adhesive 40 or electrically conductive sheet 20 having the adhesive property between the electronic components 301, as in the laminated electronic component of the second or third example. The electrically conductive adhesive 40 can be applied manually or with an automation means, e.g., by using an injectortotype unit. The electrically conductive sheet 20 having the adhesive property can be attached to each electronic component 301 manually or with an automation means. When a plurality of electronic components 301 are laminated, the electrically conductive adhesive 40 or electrically conductive sheets 20 having the adhesive property may be respectively coated or attached on the electronic components 301 in advance, followed by successive lamination. Alternatively, a process may be used in which the electrically conductive adhesive 40 or electrically conductive sheets 20 having the adhesive property are coated or attached to electronic components 301, then the electronic components 301 are laminated on the surface of the electrically conductive adhesive 40 or electrically conductive sheets 20 having the adhesive property, and a laminated electronic component is formed by repeating this procedure.

In accordance with the present invention, after the electronic components 301 have been laminated, the laminate is heated and cured to integrate the electronic components 301. The preferred heating conditions are as follows: 25°C to 200°C, 5 min to 60 min.

### [Fourth Embodiment]

The fourth embodiment is an example of a laminated electronic component comprising one electrically conductive sheet having the adhesive property and a plurality of substrates.

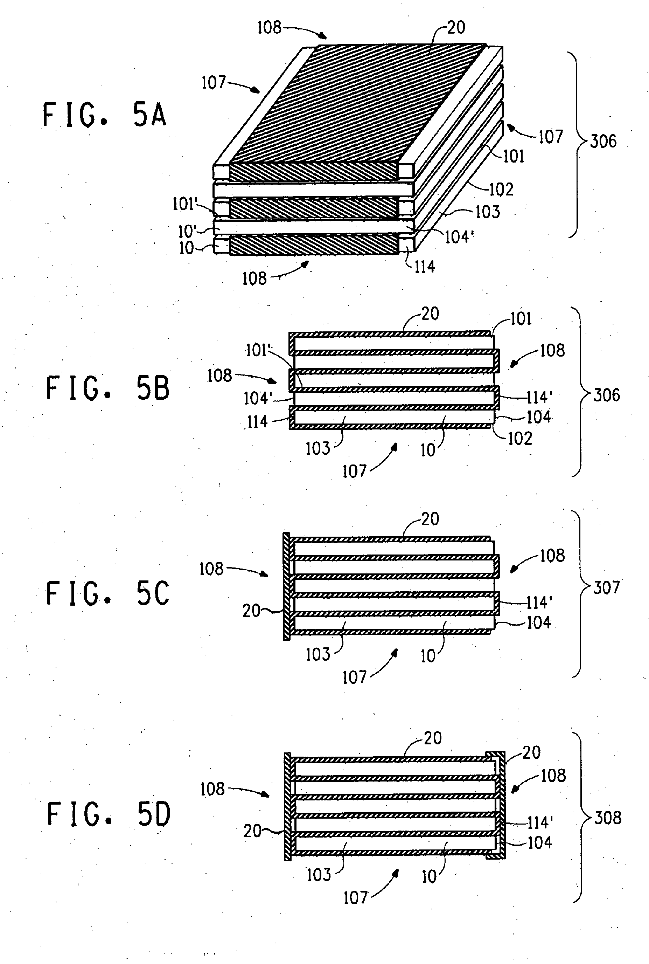

FIG. 5A is a perspective view of a laminated electronic component 306 of the fourth embodiment. FIG. 5B is a side view showing a side surface 107 of the laminated electronic component 306. In the laminated electronic component 306, one electrically conductive sheet 20 having the adhesive property is first coated on the lower surface 102, one side surface 114 of a pair of opposing side surfaces, and an upper surface 101 of the first substrate 10, and a second substrate 10' is then provided on the electrically conductive sheet 20 having the adhesive property that is located on the upper surface. The electrically conductive sheet 20 having the adhesive property is then coated on a side surface 114', of a pair of facing side surfaces of the second substrate 10', that faces the side surface 114 of the first substrate 10 that is coated with the electrically conductive sheet 20 having the adhesive property and on an upper surface 101' of the second substrate 10'. Such structures are laminated repeatedly as units of the laminated electronic component 306 to configure the laminated electronic component 306 of the fourth embodiment.

As shown in Figs 5A and 5B, the side surfaces 114 of the substrates coated with the electrically conductive sheet 20 having the adhesive property and uncoated side surfaces 104 of the substrates appear alternately on the side surface 108 of the laminated electronic component 306. Thus, the side surface 108 is partially coated with the electrically conductive sheet 20 having the adhesive property.

On the other hand, as shown in Figs. 5A and 5B, the other pair of side surfaces 107 of the laminated electronic component 306 is not coated with the electrically conductive sheet 20 having the adhesive property.

In the configuration shown in FIG. 5, five substrates were used, but no lamination is placed on the number of laminated substrates and it can be increased or decreased according to the application.

Another example of the fourth embodiment is shown in FIG. 5C. FIG. 5C is a side view of a laminated electronic component 307; this is a view from the other side surface 107.

In the structure of this example, one side surface 108 of the laminated electronic component 306 that was coated with the electrically conductive sheet 20 having the adhesive property is further coated with the electrically conductive sheet 20 having the adhesive property.

Yet another example of the fourth embodiment is shown in FIG. 5D. FIG. 5D is a side view of a laminated electronic component 308; this is a view from the other side surface 107.

In the structure of this example, both side surfaces 108 of the laminated electronic component 306 that were coated with the electrically conductive sheet 20 having the adhesive property are further coated with the electrically conductive sheet 20 having the adhesive property.

### (Method for manufacturing the electronic component of the fourth embodiment)

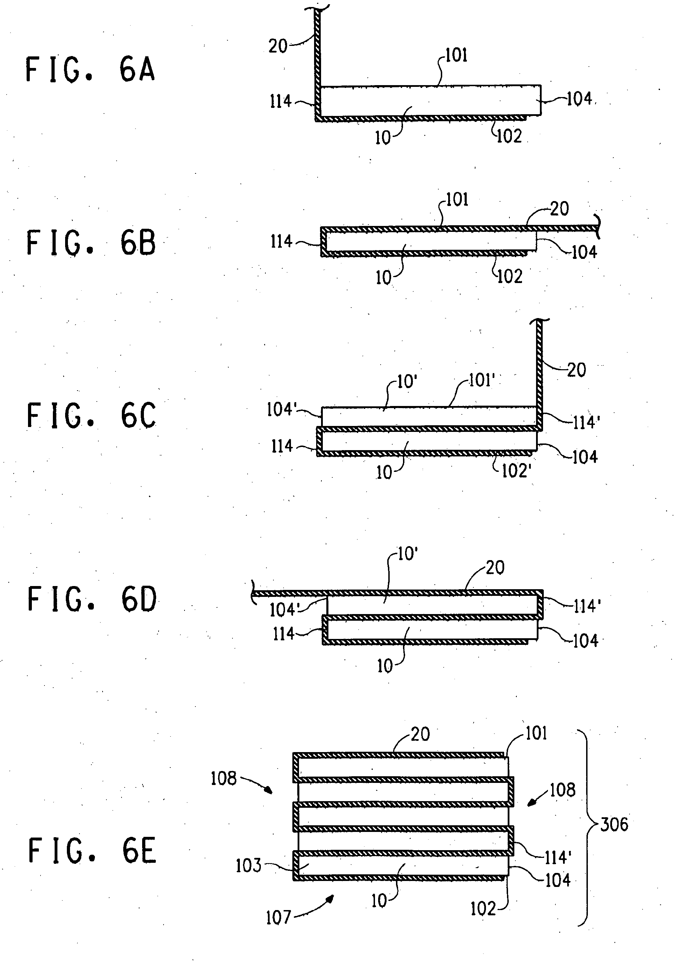

The electronic component 306 of the fourth embodiment of the present invention is manufactured by alternately stacking manually or with an automation means the electrically conductive sheets 20 having the adhesive property and two or more substrates 10. For example, the laminated electronic component 306 can be manufactured as shown in Figs. 6A to 6E. More specifically, first, one electrically conductive sheet 20 having the adhesive property is prepared. A lower surface 102 of the first substrate 10 is bonded to the electrically conductive sheet 20 having the adhesive property. Then, one side surface 114 of a pair of opposing side surfaces of the substrate 10 is coated with the electrically conductive sheet 20 having the adhesive property (FIG. 6A) and then the upper surface 101 is coated (FIG. 6B). A lower surface 102' of the second substrate 10' is then bonded to the electrically conductive sheet 20 having the adhesive property located on the upper surface of the first substrate 10. At this time, of the side surfaces of the second substrate, the electrically conductive sheet 20 having the adhesive property extends to a side surface 114' facing the side surface 114 coated with the electrically conductive sheet 20 having the adhesive property on the first substrate 10'. When the electrically conductive sheet 20 having the adhesive property is bonded so as to cover the upper surface of the second substrate 10', the electrically conductive sheet 20 having the adhesive property is placed on the side surface 114' and the upper surface 101' of the second substrate (Figs. 6C and 6D). The laminated electronic component 306 of the fourth embodiment can be obtained by repeating this operation (FIG. 6E).

The above-described laminated electronic components 307 and 308 are manufactured by attaching, manually or with an automation means, the electrically conductive sheet 20 having the adhesive property to the side surface 108 of the laminated electronic component 306 that was partially coated with the electrically conductive sheet 20 having the adhesive property.

In accordance with the present invention, after the substrates and electrically conductive sheets having the adhesive property have been laminated, they are heated and cured to integrate the structural elements. The heating is preferably conducted under the following conditions: 80°C to 200°C, 10 min to 60 min.

### [Fifth Embodiment]

The fifth embodiment is an example of a laminated electronic component in which a plurality of electronic components of the second embodiment are laminated. The laminated electronic component 302 of the fifth embodiment has a structure in which two or more electronic components shown in FIG. 3 are laminated. No specific limitation is placed on the orientation of laminated electronic components 302 in the laminated electronic component, and the side surfaces 114 of electronic components 302 that were coated with the electrically conductive sheet 20 having the adhesive property can appear on any surface and in any order on the pair of opposing side surfaces of the laminated electronic component.

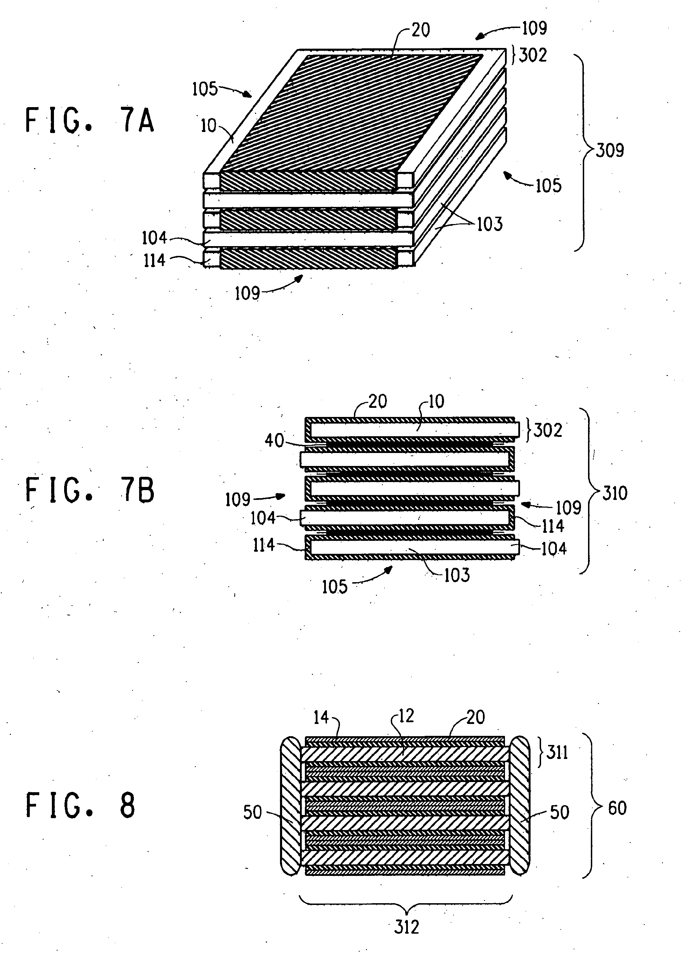

As an example, FIG. 7A is a perspective view of the laminated electronic component 309 of the fifth embodiment of the present invention. The laminated electronic component 309 has a pair of opposing side surfaces 109, and this side surface 109 has a structure in which the side surfaces 114 of the electronic components 302 that were coated with the electrically conductive sheet 20 having the adhesive property and the opposing side surfaces 104 that were not coated appear alternately.

On the other hand, a pair of opposing side surfaces 105 of the laminated electronic component 309 comprise the side surfaces 103 of the electronic components 302 that are not coated with the electrically conductive sheet 20 having the adhesive property.

In the example shown in FIG. 7A, five electronic components 302 are laminated, but no specific limitation is placed on the number of laminated electronic components and this number can be increased or decreased according to application.

Furthermore, the laminated structure of electronic components 302 is not limited to the example shown in FIG. 7A, and the side surfaces 114 that were coated with the electrically conductive sheet 20 having the adhesive property or the uncoated side surfaces 104 may be joined together, or those side surfaces may appear on the side surface 109 in a random order.

Another example of the fifth embodiment will be explained below. The laminated electronic component 310 of this example is shown in FIG. 7B. In this example, an electrically conductive adhesive 40 is introduced between the electronic components 302 in the laminated electronic component 309. Furthermore, the electrically conductive sheet 20 may be introduced instead of the electrically conductive adhesive 40 (this configuration is not shown in the figures).

### (Method for manufacturing the electronic component of the fifth embodiment)

The laminated electronic component of the fifth embodiment of the present invention is manufactured by stacking two or more electronic components 302 so that the side surfaces 114 of the electronic components 302 coated with the electrically conductive sheet 20 having the adhesive property appear on any one of a pair of opposing side surfaces of the laminated electronic component.

As an example, the laminated electronic component 309 of the fifth embodiment of the present invention can be manufactured by stacking two or more electronic components 302 so that the side surfaces 114 coated with the electrically conductive sheet 20 having the adhesive property appear alternately on a pair of opposing side surfaces 109.

In the laminated electronic component 309, five electronic components 302 are laminated, but no specific limitation is placed on the number of laminated electronic components and this number can be increased or decreased according to application.

The method for laminating the electronic components 302 is not limited to the example of the laminated electronic component 309. For example, the electronic components 302 may be stacked so that the coated side surfaces 114 or uncoated side surfaces 104 are joined together or appear on the side surface 109 in a random order.

In the fifth embodiment, the electronic components 302 are bonded together by using the adhesive force of the electrically conductive sheets 20 having the adhesive property that are contained in the electronic components 302.

In the present embodiment, no limitation is placed on the lamination means. For example, in the above-described example illustrated by FIG. 7B, an electrically conductive adhesive 40 may be coated between the electronic components 302 and the electronic components 302 may be adhesively bonded to each other. In another configuration (not shown in the figure), the electronic components 302 may be bonded to each other by inserting the electrically conductive sheets 20 having the adhesive property between the electronic components and using the adhesive force of the electrically conductive sheets having the adhesive property .

Furthermore, as described in the examples of two types explained in the fourth embodiment, the electrically conductive sheets 20 having the adhesive property may be attached manually or with an automation means on one or both side surfaces 109 that were partially coated with the electrically conductive sheets 20 having the adhesive property.

The above-described examples of the electronic components in accordance with the present invention are not limiting. For example, the electronic components 301 and electronic components 302 may be assembled and laminated in a variety of ways.

As described above, the electrically conductive adhesive 40 can be applied manually or, when possible, with an automation means, for example, by using an injector-type unit. The electrically conductive sheet can be attached to electronic components 302 manually or with an automated means. When a plurality of electronic components 302 are laminated, the lamination may be performed by coating or attaching the electrically conductive adhesive 40 or electrically conductive sheets 20, respectively, to the electronic components 302 and then laminating the electronic components successively. Alternatively, a process may be used in which the electrically conductive adhesive 40 or electrically conductive sheets 20 are coated or attached to the electronic components 302, the electronic components 302 are laminated on the surface of the electrically conductive adhesive 40 or electrically conductive sheets 20, and a laminated electronic component is formed by repeating this procedure.

In accordance with the present invention, after the electronic components 302 have been laminated, they are heated and cured to integrate each electronic component 302. The heating is preferably conducted under the following conditions: 25°C to 200°C, 5 min to 60 min.

### (II) Capacitor

The capacitor in accordance with the present invention will be explained below. In the below-explained capacitor, one possible substrate is obtained by using a metal plate and forming a metal oxide film of this metal plate as a dielectric on this metal plate.

FIG. 8 is a cross-sectional view illustrating a capacitor 60 of an embodiment of the present invention. The structure thereof will be explained below in greater detail.

An electronic component 311 comprises a substrate 10 comprising a metal plate 12 and an oxide coating film 14 covering the upper surface, lower surface, and a pair of opposing side surfaces of the metal plate 12 and an electrically conductive sheet 20 having the adhesive property that is attached on the oxide coating film 14 of the substrate 10. The surface of the metal plate 12 is exposed (that is, not coated with the oxide coating film) on the pair of opposing side surfaces that are not coated with the oxide coating film 14, portions of the upper surface and lower surface of the metal plate that are not coated with the electrically conductive sheet 20 having the adhesive property , and those portions of the side surfaces coated with the electrically conductive sheet 20 having the adhesive property that were not coated with the adhesive sheet.

In a laminated electronic component 312 in accordance with the present invention, a plurality of the electronic components 311 are laminated with orientation such that the end sections where the metal is exposed have the same orientation. In the configuration shown in the figure, the laminated electronic component 312 is formed by laminating four electronic components 311, but no specific limitation is placed on the number of laminated electronic components and this number can be increased or decreased according to application.

In the capacitor 60 in accordance with the present invention, at the two opposing side surfaces of the laminated electronic component 312, the end sections where the metal surface is exposed in the electronic components 311 constituting the laminated electronic component 312 are joined together. The joint section is denoted by the reference numeral 50 in the figure.

### (Method for manufacturing the capacitor of the present embodiment)

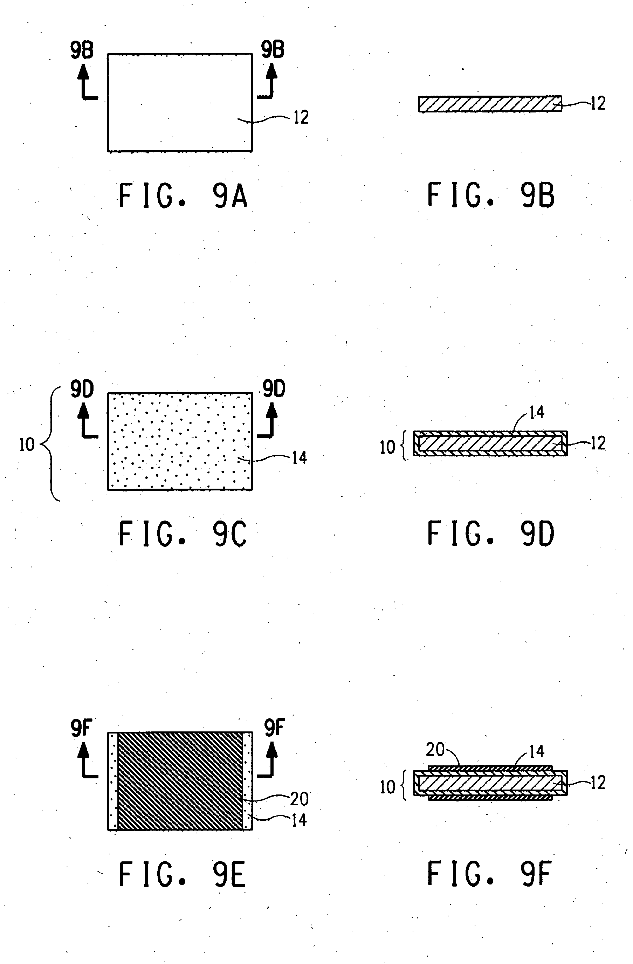

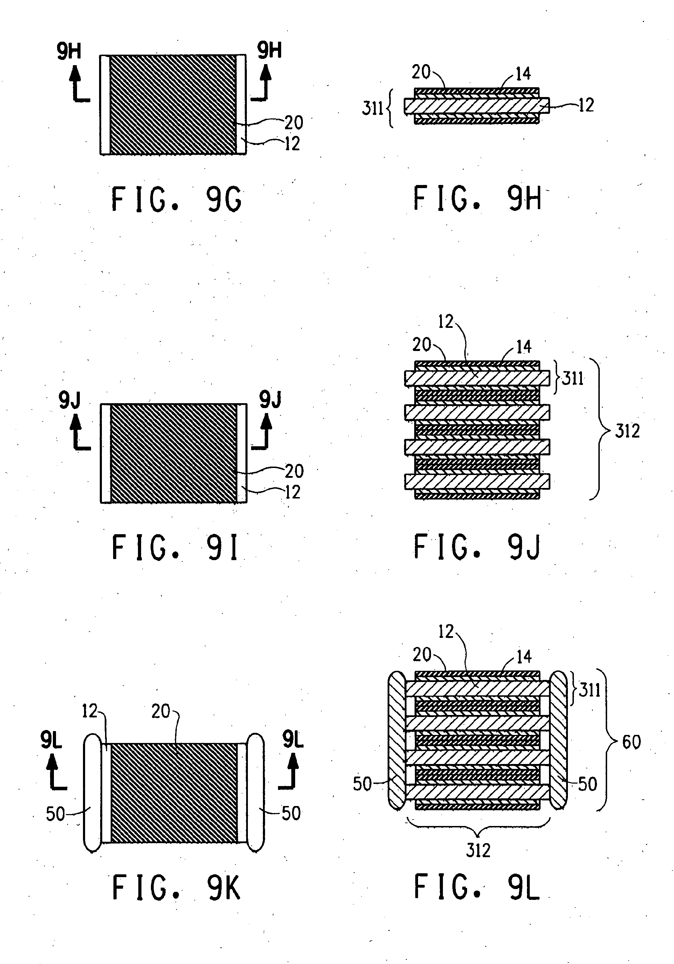

The capacitor is manufactured, for example, as shown in Figs. 9A to 9F.

More specifically, first, a metal plate 12 is prepared (FIG. 9A). The metal plate is subjected to conversion treatment to form an oxide coating film 14 on the surface and obtain a substrate 10 (FIG. 9B). An electrically conductive sheet 20 having the adhesive property is wound about the substrate 10 so as to cover the upper surface, lower surface, and a pair of opposing side surfaces of the substrate 10 (FIG. 9C). Then, a pair of side surfaces of the substrate 10 that were not coated with the electrically conductive sheet 20 having the adhesive property , the portions of the upper surface and lower surface of the metal plate that were not coated with the electrically conductive sheet 20 having the adhesive property , and those portions of the side surface having attached thereto the electrically conductive sheet 20 having the adhesive property to which the electrically conductive sheet having the adhesive property has not adhered are subjected to etching or the like to expose the surface of the metal plate 12 and form an electronic component 311 (FIG. 9D). Two or more electronic components 311 manufactured in this manner are laminated so that the end sections where the surface of the metal plate 12 is exposed appear on the same side surface, a laminate is thereby formed, and the laminate is heated to integrate the structural elements and obtain an electronic component 312 (FIG. 9E). Finally, the end sections of the electronic components 311 constituting the electronic component 312 where the surface of the metal plates 12 is exposed are joined together on the respective sides of the electronic component 312 and the capacitor 60 in accordance with the present invention is obtained (FIG. 9F). No limitation is placed on the joining method. Specific examples of suitable joining methods include soldering, welding, and joining with an electrically conductive adhesive. In the present embodiment, the four electronic components 311 were laminated, but no specific limitation is placed on the number of laminated electronic components and this number can be increased or decreased according to application.

The lamination means is not limited to the above-described method. For example, when the laminated electronic component 312 is formed, bonding may be performed by using an electrically conductive adhesive between the electronic components 311. The electrically conductive adhesive can be applied manually or with an automated means by using, for example, an injector-type unit. Furthermore, electronic components may be bonded together by inserting electrically conductive sheets having the adhesive property between the electronic components and using the adhesive force of the electrically conductive sheets having the adhesive property.

Each structural element of the electronic component and capacitor in accordance with the present invention will be described below.

### (III) Structural elements

### [1. Substrate]

No specific limitation is placed on the substrate in accordance with the present invention. In addition to ceramic substrates used in the working examples, substrates comprising metallic aluminum, metallic tantalum, metallic niobium, and oxides or nitrides thereof can be used. For example, metal plates from metallic aluminum, metallic tantalum, and metallic niobium can be subjected to conversion treatment to form oxide coating films thereon.

### [2. Electrically conductive sheet having the adhesive property]

The expression "adhesive property" as referred to herein is a property sufficient to prevent an electrically conductive sheet and a substrate or components to move with respect to each other when the electrically conductive sheet is attached to the substrate or when the components are stacked.

Generally, in the case of printing or transferring, an electrically conductive layer is very difficult to form on the side surface of a substrate. By contrast, in accordance with the present invention, by winding an electrically conductive sheet having the adhesive property in accordance with the present invention, an electrically conductive layer can be easily formed on the upper surface, side surfaces and lower surface of the substrate. In this case, the thickness control of the electrically conductive layer also can performed in an easy manner.

The electrically conductive sheet having the adhesive property in accordance with the present invention can be also used for bonding electronic components.

When a laminated electronic component is obtained by laminating the electronic components in accordance with the present invention, the electrically conductive sheet having the adhesive property that is used in the electronic components and the electrically conductive sheet having the adhesive property that is used for bonding the electronic components may have the same or different compositions.

The electrically conductive sheet having the adhesive property in accordance with the present invention, for example, comprises 60 to 95 wt.% electrically conductive particles and 5 to 40 wt.% an organic resin (a binder).

Materials that can be used in the manufacture of the electrically conductive sheet having the adhesive property in accordance with the present invention will be described below.

### (i) Electrically conductive particles

No specific limitation is placed on the electrically conductive particles used in accordance with the present invention, provided that they can demonstrate electric conductivity, and they can be appropriately selected from metals such as gold, silver, platinum, palladium, copper, and tin. Furthermore, nonmetallic particles such as graphite and carbon black that demonstrate electric conductivity may be also selected. The electrically conductive particles of one type can be used or a mixture of several type can be used. Furthermore, alloy particles and particles obtained by plating an electrically conductive metal on electrically conductive particles or nonconductive particles such as glass particles can be also used.

No specific limitation is placed on the shape of electrically conductive particles, and they may be in the form of flakes.

No specific limitation is placed on the particle size range. For example, electrically conductive particles with a mean particle size of 10 µm or less can be used.

### (ii) Organic resin (binder)

The organic resin used in accordance with the present invention may be a thermoplastic resin or a thermosetting resin. Furthermore, a mixture of a thermoplastic resin and a thermosetting resin also may be used.. Usually, those organic resins are used upon dissolving in an adequate solvent.

### (a) Thermoplastic resins

No specific limitation is placed on thermoplastic resins used in accordance with the present invention. Examples of suitable resins include polyester resins (Vitel manufactured by Bostik Co., and the like), acrylic resins (Elvacite manufactured by Lucite Co., Ltd., and the like), fluororesins (Byton manufactured by DuPont Performance Elastomer Co., Ltd.), and silicone resins (manufactured by GE Silicone Co., Ltd.).

When a thermoplastic resin is used as the organic resin forming the electrically conductive sheet having the adhesive property, it is especially preferred that a thermoplastic resin be selected that has a softening point sufficiently lower that the heating temperature after lamination. When the softening point of the thermoplastic resin is close to or higher than the heating temperature after lamination, a sufficient bonding strength is sometimes difficult to obtain. More specifically, it is preferred that the softening point be 150°C or lower.

### (b) Thermosetting resins

No specific limitation is place don thermosetting resins used in accordance with the present invention, and epoxy thermosetting resins, urethane thermosetting resins, and phenolic thermosetting resins can be used.

When a thermosetting resin is used as the organic resin forming the electrically conductive sheet having the adhesive property, it is necessary to select a combination of a thermosetting resin and a curing agent such that a curing reaction does not proceed at a stage of forming the electrically conductive sheet having the adhesive property on a plastic film provided with a peeling function and such that the curing reaction is induced by heating after forming the electronic component in accordance with the present invention by using the electrically conductive sheet having the adhesive property. When a solid thermosetting resin is used, the softening point thereof is preferably sufficiently lower than the heating temperature. More specifically, the softening point is preferably 150°C or less.

Representative examples of combinations of the thermosetting resin and curing agent that are used in accordance with the present invention include an epoxy resin - phenol-based curing agent, epoxy resin - imidazole-based curing agent, epoxy resin - amine-based curing agent, and phenolic resin - amine-based curing agent, but this list is not limiting.

### (iii) Solvent

No specific limitation is placed on a solvent that may be used to dissolve the organic resin in accordance with the present invention, provided that the solvent can completely dissolve the organic resin. Examples of suitable solvents include cyclohexanone, butyl acetate, and cellosolve.

The solvent is preferably used in an amount of 100 to 400 g per 100 g of a thermoplastic resin and/or thermosetting resin.

### (iv) Curing agent

No specific limitation is placed on a curing agent that may be used to cure the thermosetting resin in accordance with the present invention. For example, suitable curing agents include polyamides.

A method for manufacturing the electrically conductive sheet having the adhesive property in accordance with the present invention by using the above-described materials will be explained below.

### (Method for manufacturing an electrically conductive sheet having the adhesive property)

### (First example)

In the first example, a polyester resin in accordance with the present invention is dissolved in a solvent to obtain a polyester resin solution. The electrically conductive particles in accordance with the present invention, for example, silver particles are compounded with the polyester resin solution. Then, the compound is kneaded by using, for example, a three-roll system to prepare an electrically conductive varnish. No specific limitation is placed on the kneading means, and generally a three-roll system can be used.

The electrically conductive varnish is uniformly coated on a plastic film provided with a peeling function (for example, Purex manufactured by Teijin DuPont Film Co., Ltd.), followed by drying.

The preferred drying conditions are as follows; drying temperature 25 to 100°C, drying time 5 min to 60 min.

The film thickness of the coated varnish depends on the subsequent drying conditions and thickness of the target electrically conductive sheet having the adhesive property, but is generally preferred to be 100 µm or less in a coated state. The coated state refers to a wet state prior to drying.

The electrically conductive sheet having the adhesive property in accordance with the present invention is obtained by peeling the dried electrically conductive varnish from the plastic film provided with a peeling function. The plastic film provided with a peeling function (for example, Purex manufactured by Teijin DuPont Film Co., Ltd.) may be retained till the sheets are employed in order to prevent the sheets from sticking to each other.

The thickness of the electrically conductive sheet having the adhesive property that is thus obtained is preferably 50 µm or less.

### (Second example)

In the second example, the epoxy resin in accordance with the present invention is dissolved in a solvent to obtain an epoxy resin solution. A phenol-based curing agent in accordance with the present invention is then dissolved in a solvent to obtain a phenol-based curing agent solution.

The polyester resin solution prepared in the first example, the epoxy resin solution, the phenolic resin solution, and the electrically conductive particles in accordance with the present invention, for example, silver particles, are compounded together. The compounding ratio of the polyester resin solution, epoxy resin solution, and phenol-based curing agent solution is preferably 90 : 7 : 3 to 50 : 35 : 15.

The compound is then kneaded to prepare an electrically conductive varnish. A kneading means that was described in the first example can be used.

The electrically conductive varnish is uniformly coated on a plastic film provided with a peeling function (for example, Purex manufactured by Teijin DuPont Film Co., Ltd.), followed by drying. The drying conditions and the film thickness of the coated varnish are the same as in the first example.

The electrically conductive sheet having the adhesive property in accordance with the present invention is obtained by peeling the dried electrically conductive varnish from the plastic film provided with a peeling function. Similarly to the first example, the plastic film provided with a peeling function may be retained till the sheets are employed in order to prevent the sheets from sticking to each other.

The thickness of the electrically conductive sheet having the adhesive property that is thus obtained is preferably 50 µm or less. [3. Electrically conductive adhesive]

No specific limitation is placed on the electrically conductive adhesive, provided that it can be used for bonding in the manufacture of the electronic component in accordance with the present invention or joining in the manufacture of the capacitor. Thus, commercial products, for example, Dotite (manufactured by Fujikura Kasei Co., Ltd.) and Unimec (manufactured by Namics Co., Ltd.) can be used. Furthermore, a liquid epoxy resin, for example, EPON 828 (manufactured by Hexion Specialty Chemical Co., Ltd.), a reactive diluting agent, for example, Epodil 749 (manufactured by Air Products and Chemical Co., Ltd.), a curing agent of one-liquid type, for example, an imidazole-based curing agent (manufactured by Shikoku Chemical Co., Ltd.), or a curing agent of a two-liquid type, for example, an amine curing agent (manufactured by Air Products and Chemical Co., Ltd.), and electrically conductive particles can be adequately compounded and used.

### Working Examples

### (Working Example 1)

A total of 30 g of a polyester resin (Vitel 3550B manufactured by Bostik Co.) with a softening point of 99°C was dissolved in 70 g of cyclohexanone and a polyester resin solution was obtained. Then, 63 g of silver powder (mean particle size 3 µm) was then compounded with 37 g of the resin solution, kneading with a three-roll system was conducted, and an electrically conductive varnish was produced.

The varnish was uniformly coated on a plastic film (Purex manufactured by Teijin DuPont Film Co., Ltd.) and dried for 5 min at 80°C. The dried electrically conductive varnish was peeled off form the plastic film and an electrically conductive sheet having the adhesive property and a thickness of about 35 µm was obtained.

The electrically conductive sheet having the adhesive property was wound about a ceramic substrate as shown in Figs. 2A to 2C, and heated for 60 min at 160°C to obtain an electronic component shown in FIG. 1.

A total of 86 g of a silver powder (mean particle diameter 3 µm) was compounded with 9 parts of a liquid epoxy resin (EPON828, manufactured by Hexion Specialty Chemical Co., Ltd.), 4 parts of 1,6-hexanediol diglycidyl ether (Sakamoto Yakuhin Kogyo KK), 1 part of dicyandiamide, and 0.3 part of an imidazole-based curing agent (2P4MHZ, manufactured by Shikoku Chemical Co., Ltd.), and the components were kneaded with a three-roll system to obtain an electrically conductive adhesive.

Five electronic components shown in FIG. 1 were stacked by using the electrically conductive adhesive and heated for 1 hour at 160°C to obtain a laminated electronic component having a laminated structure shown in FIG. 4C.

The electric resistance between the uppermost surface and lowermost surface of the laminated electronic component having the laminated structure shown in FIG. 4C was measured after cooling, and the value obtained was 0.09 Ω. The thickness of the electronic component was 4.1 mm and had in-plane uniformity.

The electric resistance between the upper section and lower section of the electronic component shown in FIG. 1 was 0.07 Ω and the thickness of one such electronic component was 0.68 mm.

### (Working Example 2)

An electrically conductive sheet having the adhesive property and a thickness of about 35 µm was obtained in the same manner as in Working Example 1.

The electrically conductive sheet having the adhesive property was stacked alternately with five ceramic substrate and heated for 60 min at 160°C to obtain a laminated electronic component having a laminated structure shown in FIG. 5A and FIG. 5B.

The electric resistance between the uppermost surface and lowermost surface of the laminated electronic component having the laminated structure shown in FIG. 5A and FIG. 5B was measured after cooling, and the value obtained was 0.74 Ω. The thickness of the electronic component was 3.4 mm and had in-plane uniformity.

The electric resistance between the uppermost surface and lowermost surface of the laminated electronic component was higher than that in Working Example 1 because the laminated structure was different.

### (Working Example 3)

A total of 50 g of an epoxy resin (DER642U, manufactured by Dow Chemical Co., Ltd.), which has a softening point of 92°C, was dissolved in 50 g of carbitol acetate to obtain an epoxy resin solution. A total of 50 g of a phenol-based curing agent (DEH81, manufactured by Dow Chemical Co., Ltd.), which has a softening point of 83°C, was dissolved in 50 g of carbitol acetate to produced a phenol-based curing agent solution.

A total of 34 g of the polyester resin solution produced in Working Example 2, 1.5 g of the epoxy resin solution, 0.7 g of the phenol-based curing agent solution, and 64 g of a silver powder (mean particle size 3 µm) were compounded and kneaded with a three-roll unit to produce an electrically conductive varnish.

The varnish was uniformly coated on a plastic film (Purex manufactured by Teijin DuPont Film Co., Ltd.) and dried for 5 min at 80°C. The dried electrically conductive varnish was peeled off form the plastic film and an electrically conductive sheet having the adhesive property and a thickness of about 40 µm was obtained.

The electrically conductive sheet having the adhesive property and five ceramic substrates were stacked alternately in the same manner as in Working Example 2. Subsequent heating for 60 min at 160°C yielded a laminated electronic component having a laminated structure shown in FIG. 5A and FIG. 5B.

The electric resistance between the uppermost surface and lowermost surface of this laminated electronic component was measured after cooling, and the value obtained was 3.1 Ω. The thickness of the electronic component was 3.4 mm and had in-plane uniformity.

### (Working Example 4)

An electrically conductive sheet having the adhesive property and a thickness of about 35 µm was obtained in the same manner as in Working Example 1.

The electrically conductive sheet having the adhesive property was wound about a ceramic substrate to cover the upper and lower surfaces thereof and only one side surface of the four side surfaces thereof. Subsequent heating for 60 min at 160°C yielded an electronic component shown in FIG. 3.

Five electronic components shown in FIG. 3 were laminated so that side surfaces thereof covered with the electrically conductive sheet having the adhesive property were oriented in mutually different directions. The electronic components in this case were joined together by using an electrically conductive adhesive. The laminated structure was heated for 60 min at 160°C to obtain an electronic component having a laminated structure shown in FIG. 7B.

The electric resistance between the uppermost surface and lowermost surface of this laminated electronic component was measured after cooling, and the value obtained was 0.26 Ω. The thickness of the electronic component was 4.0 mm and had in-plane uniformity.

### (Working Example 5)

An electrically conductive sheet having the adhesive property and a thickness of about 35 µm was obtained in the same manner as in Working Example 1.

The electrically conductive sheet having the adhesive property and five ceramic substrates were stacked alternately as shown in FIG. 5A and FIG. 5B. Then, two side surfaces particle coated with the electrically conductive sheet having the adhesive property were further coated with the electrically conductive sheet having the adhesive property. Subsequent heating for 60 min at 160°C yielded a laminated electronic component having a laminated structure shown in FIG. 5D.

The electric resistance between the uppermost surface and lowermost surface of this laminated electronic component was measured after cooling, and the value obtained was 0.09 Ω. The thickness of the electronic component was 3.4 mm and had in-plane uniformity.

### (Working Example 6)

The substrates were bonded with an electrically conductive sheet having the adhesive property, rather than with the electrically conductive adhesive as in Working Example 1, and heated for 60 min at 160°C to obtain a laminated electric component having a laminated structure shown in FIG. 4D.

The electric resistance between the uppermost surface and lowermost surface of this laminated electronic component was measured after cooling, and the value obtained was 0.13 Ω. The thickness of the electronic component was 3.7 mm and had in-plane uniformity.

As shown in Working Examples 1 to 6, when a laminated electronic component is formed by using and electrically conductive sheet having the adhesive property, an electrically conductive layer can be readily formed with a uniform thickness. Furthermore, because no high pressure application is required when the electrically conductive layer is formed, the damage to the substrate is reduced.

As shown in Working Examples 2, 3, 5 and 6, when joining between the layers is performed by using the electrically conductive sheet having the adhesive property as the electrically conductive adhesive, the thickness of the laminated component can be further decreased. When such laminated component is employed, for example, in a capacitor, this feature makes a contribution to the reduction of the ESR (equivalent serial resistance) value, which is one of the characteristics of the capacitor.

## Claims

1. An electronic component, comprising:
a substrate; and
an electrically conductive sheet having an adhesive property and attached to said substrate.

2. The electronic component according to claim 1, wherein said electrically conductive sheet having the adhesive property is disposed so as to cover an upper surface, a lower surface, and at least one side surface of said substrate.

3. The electronic component according to claim 1, wherein said substrate is formed from a dielectric or from a conductor and a dielectric.

4. The electronic component according to claim 1, wherein said substrate is made from a ceramic, or aluminum, tantalum, niobium, or oxides or nitrides thereof.

5. A capacitor having the electronic component of claim 1.

6. A laminated electronic component in which two or more substrates having attached thereto an electrically conductive sheet having the adhesive property are laminated.

7. The laminated electronic component according to claim 6,
wherein said substrates are bonded to each other by using an adhesive force of the electrically conductive sheet having the adhesive property.

8. The laminated electronic component according to claim 6,
wherein said electronic components are bonded to each other by using an electrically conductive adhesive.

9. The laminated electronic component according to claim 6,
wherein said substrate is formed from a dielectric or from a conductor and a dielectric.

10. The laminated electronic component according to claim 6,
wherein said substrate is made from a ceramic, or aluminum, tantalum, niobium, or oxides or nitrides thereof.

11. A capacitor having the laminated electronic component of claim 6.

12. The capacitor according to claim 11, wherein said substrate is formed from a dielectric or from a conductor and a dielectric.

13. The capacitor according to claim 11, wherein said substrate is selected from the group consisting of a ceramic; aluminum and an oxide or a nitride thereof; tantalum and an oxide or a nitride thereof; niobium and an oxide or a nitride thereof; and an oxide or nitride of aluminum, tantalum, or niobium.

14. The capacitor according to claim 11, wherein said substrate is a metal sheet comprising metallic aluminum having an oxide coating film formed on the surface thereof by a conversion treatment.
